# EUROPÄISCHE PATENTANMELDUNG

(11) **EP 3 121 050 A1**
(43) Veröffentlichungstag der Anmeldung: **25.01.2017**
(21) Anmeldenummer: 15178166.3
(22) Anmeldetag: 24.07.2015
(51) Int. Cl.: B60K 15/067, B60K 15/07, F17C 13/08

(54) **TANKSYSTEM FÜR EIN FAHRZEUG**

(71) Anmelder: SALZBURGER ALUMINIUM AKTIENGESELLSCHAFT, 5651 Lend (AT)
(72) Erfinder: LIND, Christoph, 5671 Bruck (AT)
(74) Vertreter: Weiser, Andreas

(57) **Zusammenfassung**

Tanksystem (1) für ein Fahrzeug, mit einem Tank (2) für Betriebsstoffe, der einen allgemein-zylindrischen Mantel (3) mit einer Mantelachse (A) und zwei Endkappen (4, 5) hat, die jeweils an gegenüberliegenden Stirnebenen (S) des Mantels (3) ansetzen, und mindestens einer am Fahrzeug montierbaren Tragkonsole (6, 7), welche den Tank (2) an einer der Endkappen (4, 5) stützt.

## Beschreibung

Die vorliegende Erfindung betrifft ein Tanksystem für ein Fahrzeug, umfassend einen Tank für Betriebsstoffe, der einen allgemein-zylindrischen Mantel mit einer Mantelachse und zwei Endkappen hat, die jeweils an gegenüberliegenden Stirnebenen des Mantels ansetzen, und zumindest eine am Fahrzeug montierbare Tragkonsole.

Derartige Betriebstofftanks werden in der Regel seitlich am Fahrzeugchassis bzw. -rahmen von Lastkraftfahrzeugen oder auch direkt hinter der Fahrerkabine montiert und insbesondere zur Lagerung von herkömmlichem Treibstoff, aber auch von verflüssigtem Erdgas (liquefied natural gas, LNG), komprimiertem Erdgas (compressed natural gas, CNG) oder verflüssigtem Wasserstoff verwendet.

Die AT 10 978 U1 zeigt die Montage solcher Betriebstofftanks am Fahrzeugrahmen. Dazu werden Tragkonsolen verwendet, die am Fahrzeugrahmen angeschraubt werden, um darauf den Betriebsstofftank an seinem Mantel abzustützen und mit über seinen Mantel geführten Spanngurten festzuzurren. Eine derartige Montage des Betriebsstofftanks nimmt jedoch aufgrund der Dicke der Tragkonsolen viel Platz zwischen dem Fahrzeugrahmen und dem Tank und bei L- bzw. sichelförmigen Tragkonsolen, die bis unter den Tank reichen, auch unter dem Tank ein. Da der Platz seitlich des Fahrzeuges und hinter der Fahrerkabine beschränkt ist, werden damit durch die Dicke der Tragkonsolen und Spanngurte der maximale Durchmesser des Betriebstofftanks und somit sein Fassungsvermögen eingeschränkt. Zudem können Armaturen, z.B. eine Betankungsarmatur oder eine Ventleitung zur Entlüftung des Tanks, nur schwer bzw. überhaupt nicht an der Mantelfläche des Tanks angebracht werden, da diese von den Spanngurten beschränkt ist.

Die Erfindung setzt sich zum Ziel, ein Tanksystem für ein Fahrzeug zu schaffen, welches die Probleme des Standes der Technik überwindet.

Dieses Ziel wird mit einem Tanksystem der einleitend genannten Art erreicht, das sich gemäß der Erfindung dadurch auszeichnet, dass die genannte zumindest eine Tragkonsole den Tank an einer der Endkappen stützt.

Die Erfindung schafft somit erstmals ein Tanksystem, bei dem der Tank an einer der oder beiden Endkappen gehalten wird, um die Tragkonsole(n) dort seitlich außerhalb der Mantelfläche anzubringen. Dadurch kann der Manteldurchmesser des Tanks dort bis zu dem maximal für den Tank zur Verfügung stehende Bauraum vergrößert werden. Insbesondere der Platz zwischen Tankmantel und Fahrzeugrahmen und unter dem Tankmantel kann so optimal ausgenützt werden. Dadurch kann der Betriebstofftank ein wesentlich größeres Fassungsvermögen aufweisen bzw. ein größeres Volumen von mitgeführtem Betriebsstoff fassen, wodurch auch die Reichweite des Fahrzeugs signifikant erhöht werden kann.

Weiters wird durch die Abstützung des Tanks an seinen Endkappen erreicht, dass die Mantelfläche des Tanks nicht von Gurten überspannt, sondern vollständig frei von Montageteilen ist, sodass z.B. Armaturen oder Wärmetauscher des Tanks an dessen Mantelseite gelagert werden können. Bevorzugt sind deshalb Armaturen und/oder ein Wärmetauscher des Tanks zwischen den Stirnebenen des Mantels, d.h. im "Mantelzwickel", angeordnet, um einen weiteren Bauraumgewinn zu erreichen, da diese somit nicht mehr an anderen Stellen des Tanks bzw. des Fahrzeugs angebracht werden müssen.

Bevorzugt sind zwei Tragkonsolen vorgesehen, die den Tank jeweils an einer anderen Endkappe stützen. Dadurch wird eine symmetrische und daher besonders einfache und platzsparende Tragkonsolenlösung geschaffen. Alternativ könnten nur eine an einer Endkappe angreifende Tragkonsole und eine oder mehrere am Mantel angreifende Tragkonsole(n) vorgesehen werden, was besonders bei gekrümmten bzw. geknickten Fahrzeugrahmen von Vorteil ist.

Besonders vorteilhaft ist es, wenn die Tragkonsole zumindest ein elastisches Dämpfungselement aufweist, mittels welchem der Tank elastisch dämpfend an die Tragkonsole gekoppelt ist. Dies wird beispielsweise durch einen elastisch dämpfenden Gurt oder durch elastische Dämpfungsringe, Streifen od.dgl. erreicht, wie später noch genauer ausgeführt. Durch das bzw. die elastischen Dämpfungselemente wird verhindert, dass der Tank starr an den Fahrzeugrahmen gekoppelt ist, wodurch Beschädigungen des Tanks aufgrund von Vibrationen oder Stößen im Fahrzeugbetrieb vermieden werden.

In einer bevorzugten Ausführungsform der Erfindung weist zumindest eine der Endkappen eine in Richtung der Mantelachse auskragende Stützeinrichtung auf, wobei die Tragkonsole die Stützeinrichtung in einer zur Mantelachse normalen Ebene zumindest teilweise umgreift. Durch die Stützeinrichtung wird eine bessere Angriffsmöglichkeit für die Tragkonsole geboten, als dies bei einer "glatten" Endkappe möglich wäre: Da die Stützeinrichtung in Richtung der Mantelachse auskragt, wird eine besonders effiziente Kraftübertragung von der Tragkonsole auf den Tank erreicht.

Bevorzugt befinden sich auf der dem Fahrzeug abgewandten Seite des Tanks die genannte Stützeinrichtung und die Tragkonsole innerhalb einer in Richtung der Mantelachse gesehenen Kontur des Mantels. Dadurch ragt kein Teil der Montagekonstruktion über den Durchmesser des Tankmantels vor, sodass der in dieser Richtung zur Verfügung stehende Einbauraum optimal ausgenützt und damit das Tankfassungsvermögen optimiert werden kann.

Besonders günstig ist es, wenn zumindest eine Endkappe kalottenförmig ist und sich die zugehörige Stützeinrichtung, gesehen in einer Richtung normal zur Mantelachse, zwischen der Stirnebene des Mantels und der Scheitelebene der Endkappe befindet. Dadurch wird jener Zwickel, der sich bei einer kalottenförmigen Endkappe zwischen der Endkappe, einer gedachten Mantelverlängerung und der gedachten Scheitelebene der Endkappe einstellt ("Kappenzwickel"), für die Aufnahme der Tragkonsole und ihrer Stützeinrichtung ausgenützt, so dass auch die Länge des Tanks nicht über die Endkappe hinaus erhöht wird, was wiederum zu einer optimalen Bauraumausnützung und damit Maximierung des Tankfassungsvermögens führt.

Die Stützeinrichtung kann in einer Vielzahl von Ausführungen gestaltet werden. In einer ersten bevorzugten Ausführungsform ist die Stützeinrichtung ein Ring, der bevorzugt an die Endkappe angeschweißt ist. Dadurch wird eine besonders stabile Stützeinrichtung geschaffen, die in einfacher Weise an der Endkappe montiert werden kann.

In einer zweiten bevorzugten Ausführungsform ist die Stützeinrichtung eine Abdeckung ("Shroud") für Armaturen, die mit der Endkappe lösbar verbunden ist. Dadurch kann eine bereits an der Endkappe vorhandene Komponente als Stützeinrichtung mitverwendet werden. Durch die lösbare Verbindung kann zudem eine einfache Wartung der von der Abdeckung umschlossenen Armaturen erreicht werden. Alternativ kann die Abdeckung auch an die Endkappe angeschweißt oder angenietet sein.

In allen vorgenannten Ausführungsformen kann insbesondere die Tragkonsole einen sichel- oder L-förmigen Arm aufweisen, auf welchem die jeweilige Endkappe - oder deren Stützeinrichtung, falls vorhanden - mittels eines Gurtes festspannbar ist. Dadurch kann eine bewährte Art von Tankfixierung mittels Spanngurten eingesetzt werden, die sich durch eine einfache Montage und Demontage auszeichnet, ohne das Tankvolumen zu beeinträchtigen.

Bevorzugt ist dabei der Gurt ein Stahlband mit einer elastischen Dämpfungsunterlage, um eine elastisch dämpfende Kopplung des Tanks an den Fahrzeugrahmen zu ermöglichen.

Alternativ kann die Tragkonsole eine Schelle, bevorzugt eine Spannschelle, sein, in welcher die jeweilige Endkappe - oder deren Stützeinrichtung, falls vorhanden - festklemmbar ist. Eine derartige Schellenfixierung ist sowohl kostengünstig als auch robust. Bevorzugt ist dabei zwischen der Schelle und der Endkappe bzw. der Stützeinrichtung eine Schicht aus elastisch dämpfenden Material zwischengelegt, um eine elastisch dämpfende Kopplung des Tanks an den Fahrzeugrahmen zu ermöglichen.

In einer dritten bevorzugten Ausführungsform ist die Stützeinrichtung durch eine Mehrzahl von Bolzen gebildet, die bevorzugt jeweils an die Endkappe angeschweißt sind, und die Tragkonsole weist eine Ausnehmung für jeden Bolzen auf. Solche Bolzen sind besonders leicht an den Endkappen anzubringen, z.B. durch Verschrauben oder bevorzugt Verschweißen.

Dabei kann jede der Ausnehmungen mit einer elastischen Dämpfungsbuchse zur Aufnahme des jeweiligen Bolzens ausgestattet sein, um eine elastisch dämpfende Kopplung des Tanks an den Fahrzeugrahmen zu ermöglichen.

Die Erfindung wird nachstehend anhand von in den beigeschlossenen Zeichnungen dargestellten Ausführungsbeispielen näher erläutert. In den Zeichnungen zeigen:
die Fig. 1 bis 3 eine erste Ausführungsform des Tanksystems der Erfindung in einer Perspektivansicht (Fig. 1), einer Draufsicht (Fig. 2) und einer Stirnansicht (Fig. 3);
die Fig. 4 und 5 zwei Varianten der Stützeinrichtung des Tanksystems der Erfindung jeweils in einer ausschnittsweisen Detailansicht;
die Fig. 6 und 7 eine zweite Ausführungsform des Tanksystems der Erfindung in einer ausschnittsweisen Schnittansicht (Fig. 6) und anhand einer Perspektivansicht einer Tragkonsole desselben (Fig. 7); und
die Fig. 8 und 9 eine dritte Ausführungsform des erfindungsgemäßen Tanksystems in einer Perspektivansicht (Fig. 8) und einer ausschnittsweisen Schnittansicht im Bereich eines der Bolzen der Stützeinrichtung (Fig. 9);
Fig. 10 eine vierte Ausführungsform des erfindungsgemäßen Tanksystems in einer Perspektivansicht;
Fig. 11 eine Variante der vierten Ausführungsform in einer Draufsicht.

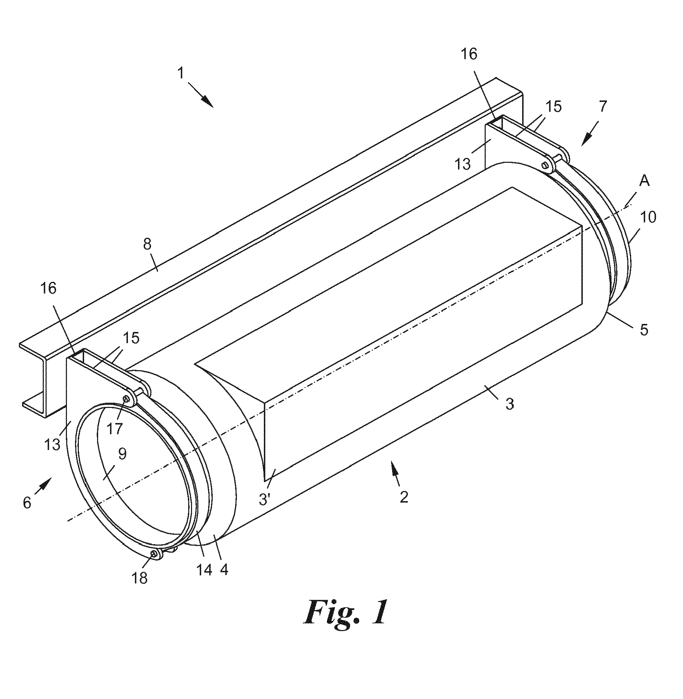

Gemäß den Fig. 1 bis 3 umfasst ein Tanksystem 1 einen Tank 2, der aus einem Mantel 3 und zwei - in diesem Beispiel kalottenförmigen - Endkappen 4, 5 zusammengesetzt ist. Der Tank 2 ist mittels zweier Tragkonsolen 6, 7 an einem Rahmen 8 eines (nicht weiter dargestellten) Fahrzeugs montiert, z.B. seitlich am Fahrzeugchassis oder direkt hinter der Fahrerkabine. Das Fahrzeug ist beispielsweise ein LKW und der Tank 2 für einen Betriebsstoff des Fahrzeugs bestimmt, beispielsweise Benzin, Diesel, LNG (liquefied natural gas), CNG (compressed natural gas), verflüssigter Wasserstoff, Katalysatorlösungen wie AdBlue^{®}, od.dgl.

Der Mantel 3 hat eine Mantelachse A, die im Wesentlichen parallel zum Fahrzeugrahmen 8 und in der Regel parallel oder normal zur Fahrtrichtung des Fahrzeugs ausgerichtet ist, auch wenn dies nicht zwingend ist. Der Mantel 3 ist in den Fig. 1 - 9 zylindrisch dargestellt, kann in weiteren Ausführungsformen jedoch auch allgemein-zylindrisch sein. Unter dem Begriff "allgemein-zylindrisch" wird ein Zylinder mit einer beliebigen Grund- bzw. Querschnittsfläche verstanden, sei sie kreisrund, oval, rechteckig, quadratisch oder quadratisch mit abgerundeten Ecken oder sonstwie geformt. So kann der Mantel 3 in einer Ausführungsform insbesondere auch einen D-förmigen Querschnitt haben.

Jede Tragkonsole 6, 7 stützt den Tank an jeweils einer der Endkappen 4, 5 ab. Dadurch wird erreicht, dass der Tank 2 am Umfang seines Mantels 3 möglichst nahe am Fahrzeugrahmen 8 montiert werden kann, um den seitlich des Rahmens 8 am Fahrzeug oder den hinter der Fahrerkabine zur Verfügung stehenden Einbauraum durch Maximierung des Durchmessers des Mantels 3 größtmöglich auszunützen. Um eine weitere Bauraumeinsparung zu erzielen, sind Armaturen und/oder ein Wärmetauscher des Tanks 2 oder eines weiteren Tanks entlang des Mantels 3 angeordnet und können dabei von einer Abdeckung 3' verdeckt sein, wie in den Fig. 1, 2 und 3 gezeigt.

Im Bereich der Endkappen 4, 5 umgreifen die Tragkonsolen 6, 7 jeweils Stützeinrichtungen 9, 10, die an den Endkappen 4, 5 montiert sind und von diesen in beliebiger Form, jedoch zumindest teilweise auch jeweils in Längsrichtung des Tanks 2, d.h. in Richtung der Mantelachse A, auskragen.

Die Tragkonsolen 6, 7 umgreifen die Stützeinrichtungen 9, 10 in einer zur Mantelachse A normalen Ebene teilweise oder vollständig, wie später noch ausführlicher erläutert. Alternativ könnten die Stützeinrichtungen 9, 10 auch entfallen und die Tragkonsolen 6, 7 direkt an den Endkappen 4, 5 angreifen, beispielsweise indem sie kalottenförmige Endkappen 4, 5 umgreifen.

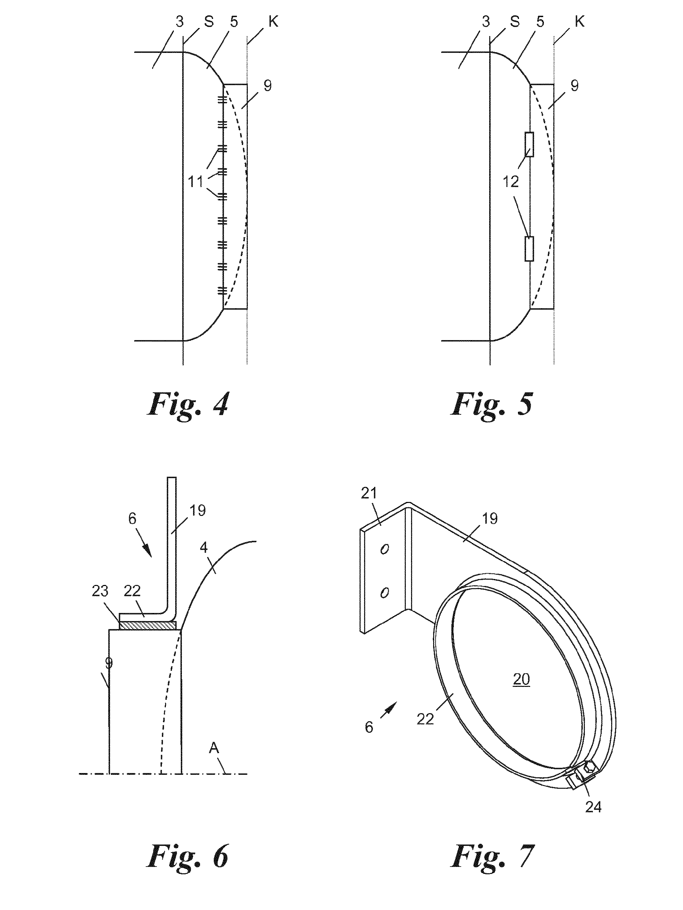

Fig. 4 zeigt eine erste Ausführungsform für eine Stützeinrichtung 9, 10 in Form eines Rings 9, der mittels einer Schweißnaht 11 auf die Endkappe 5 aufgeschweißt ist und von einer der in den Fig. 1 - 3 und 6 - 7 gezeigten Tragkonsolen umgriffen werden kann. Fig. 5 zeigt eine zweite Ausführungsform für eine Stützeinrichtungen 9, 10 in Form einer Abdeckung 10 ("shroud") für Armaturen (nicht gezeigt) des Tanks 2. Um die von der Abdeckung 10 umschlossenen Armaturen zugänglich zu halten, ist die Abdeckung 10 öffenbar oder mittels einer lösbaren Verbindung 12 an der Endkappe 4, 5 montiert, beispielsweise mittels einer Schraub-, Klemm- oder Steckverbindung.

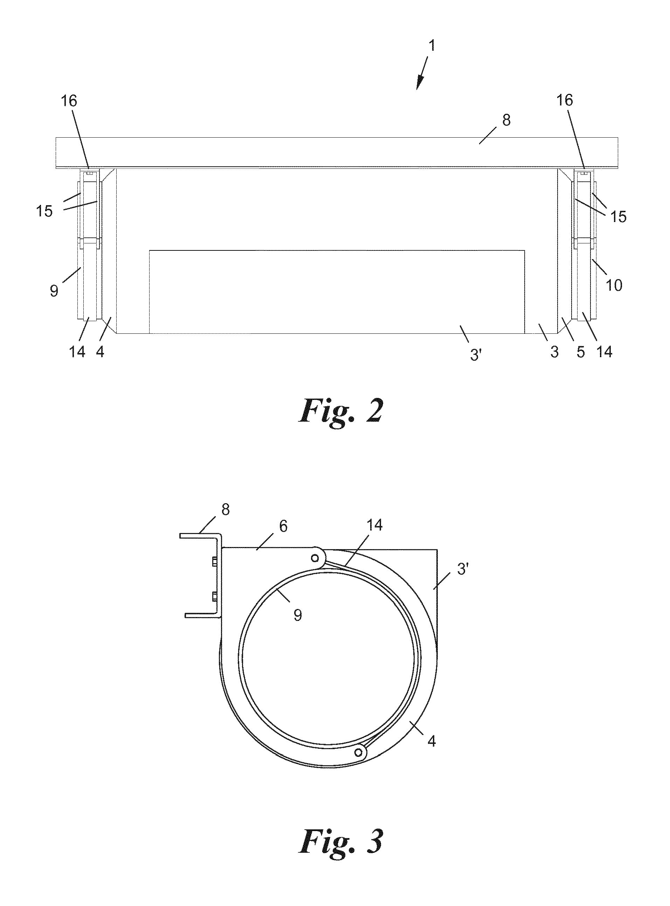

Die Fig. 4 und 5 zeigen ferner die gegenüberliegenden Stirnebenen S des Mantels 3, an denen die kalottenförmigen Endkappen 4, 5 ansetzen. Aufgrund der Kalotten- bzw. Kugelsegmentform weisen die Endkappen 4, 5 zudem Scheitelebenen K auf. Um Bauraum einzusparen, befindet sich jede Stützeinrichtung 9, 10, gesehen in einer Richtung normal zur Mantelachse A, zwischen der Stirnebene S des Mantels 3 und der Scheitelebene K ihrer Endkappe 4, 5. Weiter auskragende Stützeinrichtungen 9, 10 sind, wie beispielsweise in Fig. 7 gezeigt, auch möglich. Fig. 3 zeigt zudem, dass sich auf der dem Fahrzeug bzw. Fahrzeugrahmen 8 abgewandten Seite des Tanks 2 die genannte Stützeinrichtung 9, 10 und die zugehörige Tragkonsole 6, 7 innerhalb einer in Richtung der Mantelachse A gesehenen Kontur des Mantels 3 befinden. Die Stützeinrichtung 9, 10 befindet sich somit vollständig im "Kappenzwickel", der durch den kleinstmöglichen, gedachten, die Endkappe 4, 5 umschließenden Zylinder bzw. Quader (je nach Form der Endkappe) definiert ist.

Eine erste Ausführungsform von Tragkonsolen 6, 7, welche eine ring- oder shroudförmige Stützeinrichtung 9, 10 umgreifen kann, ist in den Fig. 1 bis 3 gezeigt. Jede Tragkonsole 6, 7 weist dabei einen sichel- oder L-förmigen Arm 13 auf, auf welchem die jeweilige Stützeinrichtung 9, 10 mittels eines Gurtes 14 festgespannt ist. In dem gezeigten Beispiel ist der Arm 13 aus zwei in ihrer Kontur an den Umfang der Stützeinrichtung 9, 10 angepassten Seitenplatten 15 aufgebaut, die mittels eines Stegblechs 16 verbunden sind. Zusätzlich kann ein weiteres Stegblech (nicht gezeigt) an der der Stützeinrichtung 9, 10 zugewandten Seite des Arms 13 vorgesehen sein.

Der Spanngurt 14 greift an Halterungen 17, 18 des Arms 13 an und ist ganz oder in Teilen aus einem elastisch dämpfenden Material gefertigt. Unter elastisch dämpfenden Materialien werden Materialien verstanden, die dazu in der Lage sind, den Tank 2 elastisch dämpfend an die Tragkonsolen 6, 7 zu koppeln. Mögliche Ausführungsformen sind beispielsweise Textil-, Kautschuk- oder Kunststoffmaterialien. So kann der Spanngurt 14 beispielsweise als ein Stahlband mit einer elastischen Dämpfungsunterlage, z.B. einer Gummiunterlage, ausgeführt sein. Alternativ oder zusätzlich können die Halterungen 17, 18 elastische Dämpfungselemente, z.B. Gummibuchsen, und/oder der Spanngurt 14 eine elastische Schnalle bzw. Spannschnalle enthalten, in welchem Fall der Spanngurt 14 auch aus einem nicht-elastischen Material, z.B. Stahl, gefertigt sein kann.

Eine alternative Ausführungsform der Tragkonsolen 6, 7 ist in den Fig. 6 und 7 gezeigt. Jede Tragkonsole 6, 7 ist hier als Schelle ausgebildet, beispielsweise mit einer Platte 19 mit einer Ausnehmung 20 zur Aufnahme einer Endkappe 4, 5 oder deren Stützeinrichtung 9, 10 und einem Winkel 21 zur Montage am Fahrzeugrahmen 8. Die Ausnehmung 20 kann mit einem Kragen 22 versehen sein. Zur elastisch dämpfenden Kopplung des Tanks 2 mit den Tragkonsolen 6, 7 kann ein elastisches Dämpfungselement 23 zwischengelegt sein, beispielsweise ein Streifen oder Reifen aus elastischem Material.

Die Tragkonsole 6, 7 kann als einstückige Schelle ausgeführt sein oder bevorzugt als Spannschelle, wie in Fig. 7 gezeigt, mit einem Schlitz, der mittels einer Schraubverbindung 24 verengt werden kann, um die Endkappe 4, 5 bzw. Stützeinrichtung 9, 10 in der Ausnehmung 20 festzuklemmen.

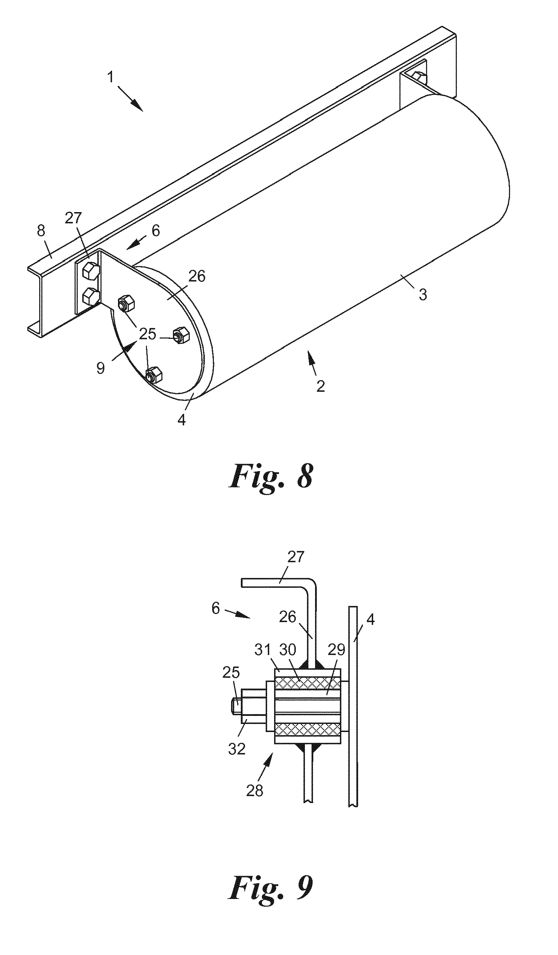

Die Fig. 8 und 9 zeigen eine weitere Ausführungsform, bei der jede Stützeinrichtung 9, 10 als eine Mehrzahl von Bolzen, d.h. zumindest zwei Bolzen, ausgebildet ist. Jede Tragkonsole 6, 7 ist hier eine Platte 26, die eine Ausnehmung für jeden Bolzen 25 und einen Winkel 27 zur Montage am Fahrzeugrahmen 8 aufweist. Bei der in den Fig. 8 und 9 gezeigten Ausführungsform sind die Endkappen 4, 5 plan, können jedoch wie in den bereits zuvor gezeigten Ausführungsformen auch kalottenförmig sein. Die Bolzen 25 sind bevorzugt symmetrisch um die Mantelachse A angeordnet, dies ist jedoch nicht zwingend. Die Bolzen 25 sind beispielsweise an die Endkappen 4, 5 angeschweißt oder mit diesen verschraubt.

Fig. 9 zeigt eine der Bolzenverbindungen zwischen einer Endkappe 4, 5 und einer Tragkonsole 6, 7 im Detail. Die den Bolzen 25 aufnehmende Ausnehmung in der Platte 26 der Tragkonsole 6, 7 ist hier mit einer elastischen Buchse 28 ausgestattet. Die Buchse 28 umfasst eine Innenhülse 29 zur Aufnahme des Bolzens 25, die über ein elastisches Ringelement 30 in einer Außenhülse 31 gelagert ist, welche in die Ausnehmung der Platte 26 eingeschweißt ist. Über auf die Bolzen 26 aufgezogene Muttern 32 ist die Tragkonsole 6, 7 mit der Endkappe 4, 5 verschraubt.

Anstelle der Verwendung der Buchse 28 könnte jede der Ausnehmungen der Platte 26 auch wie die Ausnehmung von Fig. 7 ausgeführt sein, d.h. mit einem Kragen 22 und einer elastischen Einlage 23 für jeden Bolzen 25.

In weiteren Ausführungsformen könnten die sichelförmigen Tragkonsolen der Fig. 1 - 3 bzw. die schellenförmigen Tragkonsolen der Fig. 6 und 7 mit den bolzenförmigen Stützeinrichtungen 9, 10 der Fig. 8 und 9 kombiniert werden, indem der Gurt bzw. die Schelle beispielsweise um sechs kreisförmig um die Mantelachse A angeordnete Bolzen 25 gelegt wird.

Weiters ist auch möglich, die Tragkonsolen 6, 7 und Stützeinrichtungen 9, 10 auf verschiedenen Seiten des Tanks 2 auch verschieden zu gestalten, z.B. auf einer Seite des Tanks 2 eine Ausführungsform gemäß Fig. 3 und auf der anderen Seite des Tanks 2 eine Ausführungsform gemäß Fig. 8.

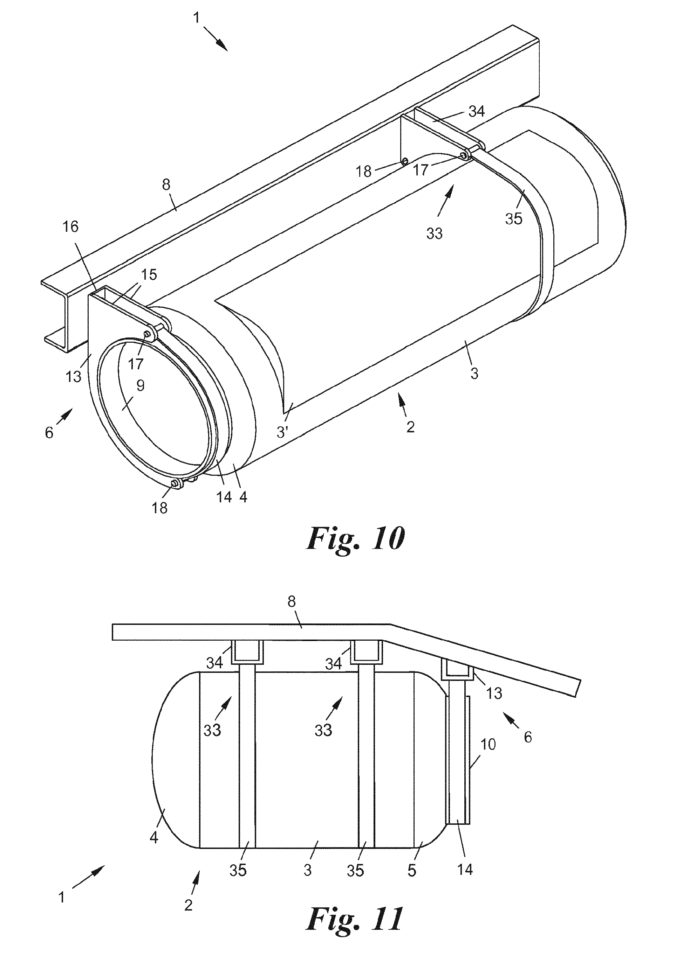

Wie in den Fig. 10 und 11 gezeigt, kann insbesondere auch nur eine Tragkonsole 6, 7 an einer der Endkappen 4, 5 angreifen. Um den Tank zu stabilisieren, kann zusätzlich zumindest eine herkömmliche, am Mantel 3 des Tanks 2 angreifende Tragkonsole 33, z.B. mit Arm 34 und Spanngurt 35, am Mantel 3 des Tanks 2 angreifen und dabei eine Abdeckung 3' mitumgreifen. Die Abdeckung 3' hat hierzu insbesondere eine abgerundet L-förmige Kontur, gesehen in Richtung der Mantelachse A, um Krafteinwirkungen des Spanngurtes 35 zu verringern. Alternativ kann die Abdeckung 3' auch nur einen Teil der Mantellänge einnehmen und so neben dem Spanngurt 35 zu liegen kommen.

Wie in Fig. 10 gezeigt, kann die Tragkonsole 33 mit einem verkürzten, nicht in den Spalt zwischen Mantel 3 und Rahmen 8 hinabreichenden Arm 34 ausgeführt werden, um Bauraum einzusparen.

Gemäß Fig. 11 kann der Fahrzeugrahmen 8 auch geknickt sein, wodurch eine dort an der Endkappe 4, 5 angreifende Tragkonsole 6 in Kombination mit herkömmlichen, am Mantel 3 angreifenden Tragkonsolen 33 sich besonders gut an den Rahmen 8 anpasst und den zur Verfügung stehende Bauraum optimal ausnutzt.

Solche herkömmlichen, am Mantel 3 angreifenden Tragkonsolen 33 können im Übrigen auch in den Ausführungsformen der Fig. 1 bis 9 zusätzlich vorgesehen werden, falls gewünscht.

Die Erfindung ist demgemäß nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Tanksystem für ein Fahrzeug, umfassend
einen Tank (2) für Betriebsstoffe, der einen allgemein-zylindrischen Mantel (3) mit einer Mantelachse (A) und zwei Endkappen (4, 5) hat, die jeweils an gegenüberliegenden Stirnebenen (S) des Mantels (3) ansetzen, und
mindestens eine am Fahrzeug montierbare Tragkonsole (6, 7),
**dadurch gekennzeichnet, dass** die Tragkonsole (6, 7) den Tank (2) an einer der Endkappen (4, 5) stützt.

2. Tanksystem nach Anspruch 1, **dadurch gekennzeichnet, dass** zwei Tragkonsolen (6, 7) vorgesehen sind, die den Tank (2) jeweils an einer anderen Endkappe (4, 5) stützen.

3. Tanksystem nach Anspruch 1 oder 2, **dadurch gekennzeichnet, dass** die Tragkonsolen (6, 7) zumindest ein elastisches Dämpfungselement (14, 23, 30) aufweist, mittels welchem der Tank (2) elastisch dämpfend an die Tragkonsole (6, 7) gekoppelt ist.

4. Tanksystem nach einem der Ansprüche 1 bis 3, **dadurch gekennzeichnet, dass** zumindest eine der Endkappen (4, 5) eine bevorzugt in Richtung der Mantelachse (A) auskragende Stützeinrichtung (9, 10) aufweist,
wobei die Tragkonsole (6, 7) die Stützeinrichtung (9, 10) in einer zur Mantelachse (A) normalen Ebene zumindest teilweise umgreift.

5. Tanksystem nach Anspruch 4, **dadurch gekennzeichnet, dass** sich auf der dem Fahrzeug abgewandten Seite des Tanks (2) die genannte Stützeinrichtung (9, 10) und die Tragkonsole (6, 7) innerhalb einer in Richtung der Mantelachse (A) gesehenen Kontur des Mantels (3) befinden.

6. Tanksystem nach Anspruch 4 oder 5, **dadurch gekennzeichnet, dass** zumindest eine Endkappe (4, 5) kalottenförmig ist und sich die zugehörige Stützeinrichtung (9, 10), gesehen in einer Richtung normal zur Mantelachse (A), zwischen der Stirnebene (S) des Mantels (3) und der Scheitelebene (K) der Endkappe (4, 5) befindet.

7. Tanksystem nach einem der Ansprüche 4 bis 6, **dadurch gekennzeichnet, dass** die Stützeinrichtung (9, 10) ein Ring ist, der bevorzugt an die Endkappe (4, 5) angeschweißt ist.

8. Tanksystem nach einem der Ansprüche 4 bis 6, **dadurch gekennzeichnet, dass** die Stützeinrichtung (9, 10) eine Abdeckung für Armaturen ist, die bevorzugt mit der Endkappe (4, 5) lösbar verbunden ist.

9. Tanksystem nach einem der Ansprüche 1 bis 8, **dadurch gekennzeichnet, dass** die Tragkonsole (6, 7) einen sichel- oder L-förmigen Arm (13) aufweist, auf welchem die jeweilige Endkappe (4, 5) oder deren Stützeinrichtung (9, 10), falls vorhanden, mittels eines Gurtes (14) festspannbar ist.

10. Tanksystem nach Anspruch 9, **dadurch gekennzeichnet, dass** der Gurt (14) ein Stahlband mit einer elastischen Dämpfungsunterlage ist.

11. Tanksystem nach einem der Ansprüche 1 bis 8, **dadurch gekennzeichnet, dass** die Tragkonsole (6, 7) eine Schelle, bevorzugt eine Spannschelle, ist, in welcher die jeweilige Endkappe (4, 5) oder deren Stützeinrichtung (9, 10), falls vorhanden, festklemmbar ist.

12. Tanksystem nach Anspruch 11, **dadurch gekennzeichnet, dass** zwischen der Schelle (6, 7) und der Endkappe (4, 5) bzw. der Stützeinrichtung (9, 10) eine Schicht (23) aus elastischem Material zwischengelegt ist.

13. Tanksystem nach einem der Ansprüche 4 bis 6, **dadurch gekennzeichnet, dass** die Stützeinrichtung (9, 10) durch eine Mehrzahl von Bolzen (25) gebildet ist, die bevorzugt jeweils an die Endkappe (4, 5) angeschweißt sind, und dass die Tragkonsole (6, 7) eine Ausnehmung für jeden Bolzen (25) aufweist.

14. Tanksystem nach Anspruch 13, **dadurch gekennzeichnet, dass** jede der Ausnehmungen mit einer elastischen Dämpfungsbuchse (29, 30, 31) zur Aufnahme des jeweiligen Bolzens (25) ausgestattet ist.

15. Tanksystem nach einem der Ansprüche 1 bis 14, **dadurch gekennzeichnet, dass** Armaturen und/oder ein Wärmetauscher des Tanks (2) zwischen den Stirnebenen (S) des Mantels (3) angeordnet sind.
